# EUROPÄISCHE PATENTSCHRIFT

(11) **EP 1 626 064 B1**
(45) Veröffentlichungstag und Bekanntmachung des Hinweises auf die Patenterteilung: **10.10.2007**
(21) Anmeldenummer: 05016627.1
(22) Anmeldetag: 30.07.2005
(51) Int. Cl.: C08K 5/00

(54) **Antibeschlagmittel für Kunststoffe**
Anti-fogging agents for polymers
Composition anti-buée pour polyméres

(30) Priorität: 10.08.2004 DE 102004038980
(43) Veröffentlichungstag der Anmeldung: 15.02.2006
(73) Patentinhaber: Cognis Oleochemicals GmbH, 40589 Düsseldorf (DE)
(72) Erfinder: Daute, Peter, 27616 Beverstedt (DE); Brand, Ernst-Udo, 27572 Bremerhaven (DE)

(56) Entgegenhaltungen:
- GB-A- 643 765
- US-A- 3 288 824
- US-A- 4 388 307
- US-B1- 6 294 192
- PATENT ABSTRACTS OF JAPAN Bd. 005, Nr. 180 (C-079), 19. November 1981 (1981-11-19) & JP 56 104953 A (CHISSO CORP), 21. August 1981 (1981-08-21)
- PATENT ABSTRACTS OF JAPAN Bd. 018, Nr. 361 (C-1222), 7. Juli 1994 (1994-07-07) & JP 06 093139 A (MARUBISHI YUKA KOGYO KK), 5. April 1994 (1994-04-05)
- PATENT ABSTRACTS OF JAPAN Bd. 017, Nr. 079 (C-1027), 17. Februar 1993 (1993-02-17) & JP 04 279643 A (MIYOSHI OIL & FAT CO LTD), 5. Oktober 1992 (1992-10-05)

## Beschreibung

### Gebiet der Erfindung

Die Erfindung befindet sich auf dem Gebiet der Kunststoffe und betrifft die Verwendung eines Gemisches auf Basis nativer Öle als Antibeschlagmittel für Kunststoffe, sowie die Kunststoffe, die dieses Antibeschlagmittel beinhalten.

### Stand der Technik

Im Bereich transparenter Verpackungen oder Folien werden häufig Antibeschlagmittel (antifogging agents) eingesetzt (Plastics Additives Handbook, 5th Edition, Hanser Verlag, S. 609 - 626).
Diese Antibeschlagmittel oder auch Klarsichtmittel genannt, erzeugen auf den Verpackungsfolien durchsichtige Schichten, indem bei der Kondensation von Wasser die Bildung von Wassertropfen auf der Kunststoff-Oberfläche verhindert wird.
Kunststoffe weisen in der Regel eine hohe Grenzflächenspannung zu Wasser auf und wirken daher wasserabweisend, so dass sich auf den Oberflächen kein gleichmäßiger Film, sondern Wasser in Tropfenform ablagert. Ohne Antibeschlagmittel bildet sich bei Verpackungsfolien der Beschlag auf der Innenseite der verpackten Güter und lässt den Inhalt der Packung nicht mehr erkennen. Außerdem bieten Tropfen kondensierten Wassers ein günstiges Medium zur Vermehrung von lebensmittelschädigenden Keimen und Mikroorganismen.
Man ist daher bemüht die Oberflächenspannung der Kunststoffe gegenüber Wasser herabzusetzen und erreicht dieses durch Hydrophilisierung der Kunststoffe. Dazu eignen sich sogenannte "innere" Antibeschlagmittel, die der Kunststoff-Rezeptur direkt zugesetzt werden oder sogenannte "äußere" Antibeschlagmittel, die als Beschichtung auf die Kunststoffoberfläche aufgetragen werden. Diese "äußeren" Antibeschlagmittel sind zwar sofort wirksam, allerdings nicht langandauernd, da sie sich einfach abwaschen oder entfernen lassen. Für einen Langzeiteffekt eignen sich daher nur "innere" Antibeschlagmitel, die in die Polymermatrix des Kunststoffes eingearbeitet sind und langsam zur Oberfläche des Substrates diffundieren. An diese werden gerade im Lebensmittelbereich hohe Anforderungen hinsichtlich ihrer Verträglichkeit gestellt. Neben der Lebensmittelverträglichkeit müssen sie geeignet für die Verarbeitung der Kunststoffe sein, d.h. hitzestabil bei den entsprechenden Verarbeitungsprozesstemperaturen. Sie dürfen die Transparenz der Filme und die Eigenschaften für Druck und Versiegelung der Folien nicht nachteilig beeinflussen, oder zu Verfärbungen oder Geruchsbelästigungen führen. Zudem wird gerade in der Kunststoffverarbeitenden Industrie zunehmend auf ökologisch verträgliche und dennoch ökonomisch vorteilhafte Prozesse geachtet.

Aufgabe der vorliegenden Erfindung war es daher, ein Antibeschlagmittel zur Verfügung zu stellen, dass den vielfachen Anforderungen Genüge tut ohne die erwähnten Nachteile aufzuweisen.

### Beschreibung der Erfindung

Gegenstand der Erfindung ist die Verwendung von Gemischen als Antibeschlagmittel für Kunststoffe, die dadurch erhältlich sind, dass man native Öle mit Polyethylenglykolen (PEG) oder Mischungen von PEG und weiteren Polyolen umestert, sowie Kunststoffe, die diese Antibeschlagmittel enthalten.
Es wurde gefunden, dass solche Antibeschlagmittel sehr einfach durch Umesterung von nativen Ölen in einem Eintopfverfahren hergestellt werden können.

Unter den zur Herstellung der Antibeschlagmittel eingesetzten nativen Ölen werden natürlich vorkommende Öle pflanzlichen oder tierischen Ursprungs verstanden. Dies sind in der Regel Triglyceride von Fettsäuren mit 10 bis 24 C-Atomen wie beispielsweise Erdnussöl , Fischöl, Leinöl , Palmöl, Rapsöl, Ricinusöl, Rüböl, Sojaöl, Sonnenblumenöl und/oder Färberdistelöl wobei bevorzugt Sonnenblumenöl, Rüböl, Sojaöl und/oder Ricinusöl eingesetzt werden.
Die Herstellung erfolgt durch basisch katalysierte Umesterung der Öle mit Polyethylenglykolen (PEG) oder einer Mischung von PEG und weiteren Polyolen. Als Katalysatoren werden NaOH, KOH und besonders bevorzugt LiOH verwendet.
Die Molmasse der PEG liegt zwischen PEG 100 und PEG 3000, besonders bevorzugt zwischen PEG 200 und PEG 1000. Als weitere Polyole können Pentaerythrit, Dipentaerythrit, Tripentaerythrit, Bistrimethylolpropan, Inosit, Polyvinylalkohol, Bistrimethylolethan, Trismethylolpropan (TMP), Sorbit, Maltit, Isomaltit, Lactit, Lycasin, Mannit, Inosit, Lactose, Leucrose, Tris-(hydroxylethyl)isocyanurat (THEIC), Palatinit, Tetramethylolcyclohexanol, Tetramethylolcyclopentanol, Tetramethylol-cyclopyranol, Glycerin, Diglycerin, Polyglycerin oder Thiodiglycerin verwendet werden. Besonders geeignet sind Glycerin, TMP, Sorbit und Penterytrit.
Das Gew.-Verhältnis von Öl:PEG:Polyol beträgt 10:1:0 bis 1:5:1.

Je nach Mengenverhältnissen und Reaktionsbedingungen entstehen unterschiedliche Gemische von Fettsäure-PEGestern Mono- Di und Triglyceriden.
Diese Gemische lassen sich sehr gut in Kunststoffe einarbeiten und zeichnen sich durch eine gute Lebensmittelverträglichkeit aus. Sie können in allen Kunststoffen eingesetzt werden, besonders jedoch in PVC, PP, PE und PET. Sie werden in Mengen von 0.05 bis 10 Gew. %, besonders bevorzugt 0.5 bis 4 Gew. % den Kunststoffen beigemischt.
Gegenstand der vorliegenden Erfindung sind daher auch Kunststoffe die diese Gemische als Antibeschlagmittel enthalten, sowie die Verwendung von Gemischen, erhältlich durch die Umesterung nativer Öle mit PEG oder Mischungen von PEG mit weiteren Polyolen als Antibeschlagmittel für Kunststoffe. Vorwiegend werden diese Antibeschlagmittel als sogenannte "innere" Antibeschlagmittel eingesetzt.

Bei dem Verfahren zur Herstellung von den Antibeschlagmitteln für Kunststoffe werden native Öle mit PEG oder Mischungen von PEG mit weiteren Polyolen in einem Eintopfverfahren basisch katalysiert umgeestert. Als Eintopfverfahren zeichnet sich dieses Verfahren durch die besondere ökologische und ökonomische Herstellweise aus.

### Beispiele

### Beispiel 1:

### Umesterung von Rüböl mit PEG 600 und Glycerin

In einem Glaskolben wurden 168.6 g Rüböl, 114.1 g Poydiol 600, 17.5 g Glycerin und 0.03 g LiOH*H2O vorgelegt und unter Rühren auf 235°C erhitzt. Nach 1 h wurde ein Vakuum von 100 mbar angelegt, nach 2 h Reaktionszeit wurde abgekühlt. Die Mischung wurde mit 15g Filterhilfsmittel und 15 g Bleicherde versetzt und filtriert. Ausbeute 264 g blanke gelbe Flüssigkeit.
Farbe 1" Lov. Gelb = 1.7, Lov. Rot = 0.4
Säurezahl = 0.31, Verseifungszahl = 106.5, Iodzahl = 63.4

### Beispiel 2:

### Umesterung von Rüböl mit PEG 600 (Beispiel 2)

In einem Glaskolben wurden 172.6 g Rüböl, 127.4 g Poydiol 600 und 0.03 g LiOH*H2O vorgelegt und unter Rühren auf 235°C erhitzt. Nach 1 h wurde ein Vakuum von 100 mbar angelegt, nach 2 h Reaktionszeit wurde abgekühlt. Die Mischung wurde mit 15g Filterhilfsmittel und 15 g Bleicherde versetzt und filtriert. Ausbeute 267 g blanke gelbe Flüssigkeit.
Farbe 1" Lov. Gelb = 4.5, Lov. Rot = 1.4
Säurezahl = 0.32, Verseifungszahl = 80.5, Iodzahl = 48.2

### Herstellung der Prüfkörper

| Beispiele: | | B3 | B4 | B5 |
|---|---|---|---|---|
| Evipol SH 7020 | (PVC, Fa. EVC) | 100 | 100 | 100 |
| Plastomol DOA | (Weichmacher, Fa. BASF) | 7 | 7 | 7 |
| Palamol 646 | (Weichmacher Fa. BASF) | 15 | 15 | 15 |
| Edenol D 81 | (epoxid. Sojaöl Fa. Cognis) | 15 | 15 | 15 |
| Stabiol VCZ 2222 | (Ca/Zn Stabilisator Fa. | 0.8 | 0.8 | 0.8 |
| Loxiol 2883 | Cognis) | 2 | 2 | 2 |
| Ester Beispiel 1 | (Glycerinmonooleat Fa. | - | 1 | - |
| Ester Beispiel 2 | Cognis) | - | - | 1 |

| | | | | |
|---|---|---|---|---|
| Die Komponenten wurden zusammengemischt und 5 min bei 185°C auf einem Laborwalzwerk gewalzt. Die Walzfelle wurden nach dem "hot fogging test" bei 60°C und dem "cold fogging test" bei 25°C/8°C untersucht. B4 und B5 sind erfindungsgemäß. | | | | |

### hot fogging test, 60°C:

| Muster | Trübung an der Folie durch feine Tröpfchen | Bildung von Tropfen auf der Folie > 5mm Durchmesser | klarer Film |
|---|---|---|---|
| | nach s | nach s | nach s |
| B3 | sofort | > 200 | > 600 |
| B4 | sofort | 60 | 140 |
| B5 | sofort | 45 | 90 |

### cold fogging test, 25°C/8°C:

| Muster | Trübung an der Folie durch feine Tröpfchen | klarer Film |
|---|---|---|
| | nach s | nach s |
| B3 | sofort | > 600 |
| B4 | sofort | 420 |
| B5 | sofort | 120 |

### "Cold-fogging Test"

Dieser Test simuliert die Antibeschlag-Eigenschaften von Filmen, die als Verpackungsmaterial für Lebensmittel verwendet werden, die im Kühlschrank aufbewahrt werden.
Dazu werden 200 ml Trinkwasser in ein 250 ml Becherglas gefüllt, das Glas mit einer Probe der zu testenden Folie abgedeckt und in einen auf 4°C temperierten, temperaturregelbaren Raum gestellt.

### "Hot-fogging Test"

Der Hot-fogging Test simuliert die Antibeschlag-Eigenschaften von Filmen, die für Verpackungen verwendet werden, in die heiße oder warme Lebensmittel gefüllt werden, die dann in der geschlossenen Verpackung im Kühlschrank aufbewahrt werden.
Dazu werden 50 ml Trinkwasser in ein 250 ml Becherglas gefüllt, das Glas mit einer Probe der zu testenden Folie abgedeckt und in einem auf 60°C temperierten Bad positioniert. Danach werden über einen Zeitraum von 600 s die Zeitabstände notiert, zu denen eine Veränderung des Filmes sichtbar wird.

## Patentansprüche

1. Verwendung von Gemischen, erhältlich durch die Umesterung nativer Öle mit PEG oder Mischungen von PEG mit weiteren Polyolen als Antibeschlagmittel für Kunststoffe.

2. Verwendung nach Anspruch 1, **dadurch gekennzeichnet, dass** man die nativen Öle auswählt aus der Gruppe, die gebildet wird von Sonnenblumenöl, Rüböl, Sojaöl und Ricinusöl.

3. Verwendung nach Anspruch 1 oder 2, **dadurch gekennzeichnet, dass** die Umesterung durch einen basischen Katalysator ausgewählt aus der Gruppe bestehend aus Natriumhydroxid, Kaliumhydroxid und Lithiumhydroxid katalysiert wird.

4. Verwendung nach einem der Ansprüche 1 bis 3, **dadurch gekennzeichnet, dass** PEG mit einer Molmasse von 100 bis 3000, vorzugsweise 200 bis 1000 eingesetzt wird.

5. Verwendung nach einem der Ansprüche 1 bis 4, **dadurch gekennzeichnet, dass** als weitere Polyole Glycerin und/oder TMP und/oder Sorbit und/oder Pentaerytrit zugesetzt werden.

6. Verwendung nach den Ansprüchen 1 bis 5, **dadurch gekennzeichnet, dass** das Gewichtsverhältnis von Öl zu PEG zu Polyol 10:1:0 bis 1:5:1 beträgt.

7. Kunststoffe, enthaltend Gemische erhältlich durch Umesterung nativer Öle mit PEG oder Mischungen von PEG mit weiteren Polyolen als Antibeschlagmittel.

8. Kunststoffe nach Anspruch 7, enthaltend 0.05 bis 10 Gew. % der Gemische als Antibeschlagmittel.

## Claims

1. Use of mixtures obtainable by transesterification of native oils with PEG or mixtures of PEG with other polyols as antifogging agents for plastics.

2. Use as claimed in claim 1, **characterized in that** the native oils are selected from the group consisting of sunflower oil, colza oil, soybean oil and castor oil.

3. Use as claimed in claim 1 and/or 2, **characterized in that** the transesterification is catalyzed by a basic catalyst selected from the group consisting of sodium hydroxide, potassium hydroxide and lithium hydroxide.

4. Use as claimed in any of claims 1 to 3. **characterized in that** PEG with a molecular weight of 100 to 3,000 and preferably 200 to 1,000 is used.

5. Use as claimed in any of claims 1 to 4, **characterized in that** glycerol and/or TMP and/or sorbitol and/or pentaerythritol are added as the other polyols.

6. Use as claimed in claims 1 to 5, **characterized in that** the ratio by weight of oil to PEG to polyol is 10:1:0 to 1:5:1.

7. Plastics containing mixtures obtainable by transesterification of native oils with PEG or mixtures of PEG with other polyols as antifogging agent.

8. Plastics as claimed in claim 7 containing 0.05 to 10% by weight of the mixtures as antifogging agent.

## Revendications

1. Utilisation de mélanges que l'on peut obtenir par transestérification d'huiles natives avec du PEG ou des mélanges de PEG et d'autres polyols, en tant que compositions anti-buée pour polymères.

2. Utilisation selon la revendication 1,
**caractérisée en ce qu'**
on choisit les huiles natives dans le groupe constitué de l'huile de tournesol, l'huile de colza, l'huile de soja et l'huile de ricin.

3. Utilisation selon la revendication 1 ou 2,
**caractérisée en ce que**
la transestérification est catalysée par un catalyseur basique choisi dans le groupe constitué de l'hydroxyde de sodium, l'hydroxyde de potassium et l'hydroxyde de lithium.

4. Utilisation selon l'une des revendications 1 à 3,
**caractérisée en ce que**
l'on utilise un PEG de masse molaire de 100 à 3 000, de préférence de 200 à 1 000.

5. Utilisation selon l'une des revendications 1 à 4,
**caractérisée en ce que**
l'on ajoute comme autres polyols du glycérol et/ou du TMP et/ou du sorbitol et/ ou du pentaérythritol.

6. Utilisation selon les revendications 1 à 5,
**caractérisée en ce que**
le rapport en poids entre l'huile, le PEG et le polyol va de 10 : 1 : 0 à 1 : 5 : 1.

7. Matières synthétiques contenant des mélanges que l'on peut obtenir par transestérification d'huiles natives avec du PEG ou des mélanges de PEG et d'autres polyols, constituant des compositions anti-buée.

8. Matières synthétiques selon la revendication 7, contenant de 0,05 à 10 % en poids de mélanges constituant des compositions anti-buée.
